# EUROPEAN PATENT SPECIFICATION

(11) **EP 4 446 778 B1**
(45) Date of publication and mention of the grant of the patent: **14.10.2026**
(21) Application number: 23305541.7
(22) Date of filing: 12.04.2023
(51) Int. Cl.: G02B 3/00, G01S 17/89, G01S 17/42, G01S 7/481, G02B 1/00, G02F 1/29

(54) **IMPROVED LIDAR IMAGING DEVICE**
VERBESSERTE LIDAR-BILDGEBUNGSVORRICHTUNG
DISPOSITIF D'IMAGERIE LIDAR AMÉLIORÉ

(43) Date of publication of application: 16.10.2024
(73) Proprietor: Centre National de la Recherche Scientifique, 75016 Paris (FR)
(72) Inventor: GENEVET, Patrice, 06130 GRASSE (FR); MAJOREL, Clément, 06600 ANTIBES (FR); MARTINS, Renato Juliano, 06600 ANTIBES (FR); LOUCIF, Amir, 06905 SOPHIA ANTIPOLIS CEDEX (FR); GOURDIN, Anthony, 13821 LA PENNE SUR HUVEAUNE (FR)
(74) Representative: IPAZ

(56) References cited:
- EP-A1- 3 457 179
- WO-A1-2022/174120
- DE-A1- 102015 110 767

## Description

### Technical field:

The present invention concerns LIDAR imaging device and more precisely LIDAR imaging device based on *Time Of Flight* measurements.

### Prior Art:

A category of LIDAR systems employs pulses of light to measure the distance to an object based on the time of flight (TOF) of each pulse of light and possibly the velocity of this object. A portion of the light reflects from the object and returns to a detector of the LIDAR system. Based on the time elapsed between emission of the pulse of light and detection of the returned pulse of light, a distance is estimated.

Like radar systems, LIDAR systems require the scanning of space with an optical beam to achieve a two- or three-dimensional detection of the observed scene. In general, this involves scanning the space with an optical beam. This results in a scanning time that may be detrimental to some applications. While the beam is directed towards a given direction, other directions in the scene are not observed. Furthermore, the area covered by the LIDAR and the speed of its coverage depend on the solutions chosen to build the LIDAR. It is a compromise between several parameters: the distance covered by the LIDAR, which is proportional to the power of the laser used, the solid angle covered by the LIDAR, which depends on the type of application (surveillance or escort, for example), and finally the speed with which the LIDAR probes the area covered (which generally depends on the type and speed of the targets sought).

In the context of LIDAR systems, the scanning of the space by an optical beam and the wide angle detection are often the two limiting parameters. Three main solutions exist to achieve laser scanning.

The first solution is mechanical. It consists of using a pair of laser transmitter and receiver which both point in the same direction. The assembly is mobile in order to scan the space. It may also involve one or more movable mirrors that allow the light beam from the laser transmitter to be directed and the reflected signal to be directed onto the photodetector. These scanning devices can eventually be miniaturized using optical MEMS (microelectromechanical systems). While this solution has the advantage of not depending on the wavelength used for LIDAR, it requires precise alignment of the optical system, and is very sensitive to vibration and acceleration, which severely limits the possible applications.

The second solution consists in using an interferential optical system to deflect the optical beam. The principle is to use an optical interference arrangement to direct the light in a given direction in space as a function of wavelength. In general, this involves separating the optical signal into several points and imposing a phase shift between these points. The interference between the signals from these points is constructive in a given direction. By varying the phase shift between these points, either by using phase modulators or by varying the wavelength of the laser used, the system scans the direction pointed by the optical beam. This solution has the advantage of not relying on any moving parts but imposes certain constraints on the speed of laser tuning and its reproducibility. Furthermore, it is not possible to obtain a large angular scan on two axes, which means that several interferential systems must be used and their use switched to obtain the desired scan. These methods are known to the skilled person (see US2018/052378 and DE102015225863).

The third solution consists in generating a point cloud illumination and detecting a 3D image using multiple detectors or an array of detectors to sample the signal and further measure the TOF for each pixel of the detector.

It is also known to use a combination of these solutions. For example, the systems in US 2017/0269215A1 and WO2017/132704A1 use photodetector arrays mounted on a moving turret.

In all the above examples, the light path of a single laser emitter/detector combination is somehow altered to achieve a broader field of view than a single sensor. The number of pixels such devices can generate per unit time is inherently limited due limitations on the pulse repetition rate of a single laser. Any alteration of the beam path, whether it is by mirror, prism, or actuation of the device that achieves a larger coverage area comes at a cost of decreased point cloud density.

In many applications, a sequence of pulses is emitted. The direction of each pulse is sequentially varied in rapid succession. In these examples, a distance measurement associated with each individual pulse can be considered a pixel, and a collection of pixels emitted and captured in rapid succession (i.e., "3D point cloud") can be rendered as an image or analyzed for other reasons (e.g., detecting obstacles). In some examples, viewing software is employed to render the resulting point clouds as images that appear three dimensional to a user. Different schemes can be used to depict the distance measurements as 3D images that appear as if they were captured by a live action camera.

Traditionally, to avoid cross-talk among multiple pulses, each of the multiple pulses is projected in a different direction. By projecting each of the multiple pulses in a different direction, each volume of space interrogated by each of the multiple pulses is completely separated from any volume of space interrogated by any of the other multiple pulses. As the separation among simultaneously interrogated spaces is increased, the likelihood of inducing measurement error due to cross-talk is reduced.

However, all of the existing beam scanning solutions are either potentially sensitive to vibration for mechanical solutions or offer fairly inhomogeneous scan angles. Furthermore, all of these solutions, by the very nature of the scan, only allow each direction of space to be observed intermittently. There is therefore a compromise to be found depending on the precision of the scan, its speed and its amplitudes.

These mechanical problems can be overcome by the flash LIDAR approach. They use a diffractive optical element (DOE) to generate a 3D point cloud and thus obtain 3D information of the environment in a single acquisition, without having to scan a laser beam. As a result, the number of images obtained per unit of time is greater than for scanning LIDAR systems. However, there are two major problems with this approach, namely that the larger the number of points, the lower the intensity of the light points, thus reducing the amount of reflected light. Consequently, the working distance is limited to a few decimeters at most. On the other hand, the field of view (FOV) of the flash LIDAR system is narrower, but by combining several sensors this can be increased to potentially 360°. Applications for these devices include mobile phones for face/digital recognition and factory automation.

One also knows in the art LIDAR imaging devices as disclosed by documents DE102015110767A1 and EP3457179A1.

The invention aims to alleviate certain problems of the prior art. To this end, an object of the invention is a LIDAR imaging device that comprises an array of *N* > 1 metalenses each adapted to collect a respective portion, called a sub-beam, of a laser beam reflected by the observed environment. Each metalens is a metasurface adapted to focus a respective sub-beam of the reflected illumination onto a respective pixel of a photodetector only when said respective sub beam is incident onto said metalens within a predetermined range of incident angles centered on a respective pair of optimal incident angle, different from and not overlapping with the predetermined ranges of optimal incident angle associated to other metalenses.

Through the use of an array of metalenses, the LIDAR imaging device of the invention has an important FOV and has a greater working distance than flash LIDAR devices of the prior art.

### Summary of the invention:

The invention is defined by the appended claims.

### Brief description of the drawings:

Other features, details and advantages of the invention will become apparent from the description made with reference to the annexed drawings, which are given as examples and which represent, respectively:
[Fig.1], an illustration of a LIDAR device according to a first embodiment of the invention,
[Fig.2A], [Fig.2B], a schematic representations of a side view and a front view respectively of a metalens of the array according an embodiment of the invention,
[Fig.3], a comparison of the transmission and the spot efficiency of a circular metalens and a hexagonal metalens of the same area as a function of the illumination angle *θ* ,
[Fig.4], a schematic illustration of a side view of the array of metalenses and the photodetector,
[Fig.5], five different configurations of nanostructures that may be used in the metalenses of the invention,
[Fig.6A], [Fig.6B], representations of simulations of respectively the phase-shift and the transmission of a metalens comprising periodic GaN cylinder on a square grating of periodicity 250 nm as a function of the radius of the cylinders, for a cylinder of height H = 1 *µm*,
[Fig.7], a transverse view of the light intensity the focal plane in a transverse view for four different direction propagations : *θ* = 0° , *θ* = 3.40 ° , *θ* = 6.76 ° and *θ* = 11.17°,
[Fig.8], an illustration of the spot efficiency and the transmission of a set of ten metalenses of the array AM of the illustrative embodiment, respectively optimized for an optimal detection angles *θ_{opt,i} =* 0°, 3.77°, 7.50°, 11.17°, 14.73°,18.14°, 21.36°, 24.34°, 27.03° and 29.38°
[Fig.9], a schematic illustration of LIDAR device according to a second embodiment of the invention.

In the drawings, unless otherwise indicated, the elements are not to scale.

### Detailed specification:

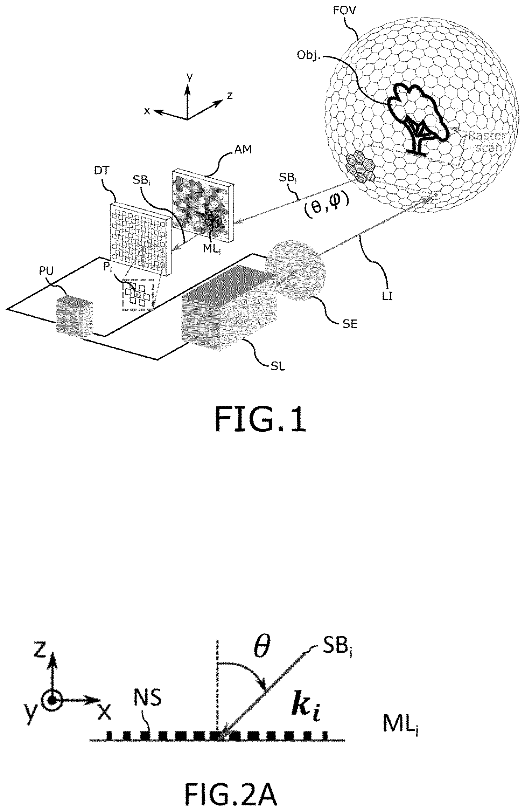

Figure 1 illustrates a LIDAR device 1 according to a first embodiment of the invention and adapted to image a three-dimensional environment (referenced Obj in figure 1).

The LIDAR device 1 according to the first embodiment of the invention comprises a laser source SL, a scanning element SE, an array AM of *N* > 1 metalenses ML₁₋ML_{N}, a photodetector DT and a processing unit PU.

The laser source SL is adapted to emit an incident laser beam LI presenting a wavelength *λ* to illuminate the three-dimensional environment Obj. The incident laser beam LI reflected by the environment is hereinafter called reflected laser beam LR. The laser source SL is not specific to the present invention and can be any laser source known to one skilled in the art, for example a laser diode. The laser source SL is preferably a pulsed laser source to facilitate the TOF measurements of the observed environment. Alternatively, the laser source SL is a continuous source adapted such that the incident laser beam LI presents an intensity modulation or frequency modulation.

The scanning element SE is adapted to induce a plurality of controllable shifts of a direction of propagation of the incident laser beam LI onto said three-dimensional environment. As a non-limiting example, the scanning element SE comprises a pair of galvanometer scanning mirrors. Thus, an angle shift applied to the mirrors induces a shift of the direction of propagation of the incident laser beam LI.

The processing unit PU is connected to the scanning element SE, to the laser source SL and to the detector DT for synchronization. Thus, the scanning element SE induces a controllable shift of a direction of propagation of said incident laser beam LI for each laser pulses emitted (or for each modulation period) to reconstruct a large field of view image of the observed environment Obj.

As a non-limiting example, the scanning element can be controlled via the processing unit PU to realize a raster scan or random scan of the observed environment Obj.

The array AM comprises N metalenses noted ML₁ to ML_{N}. Each i-th metalens, i = *1... N* is adapted to collect a respective portion, called a sub-beam SBᵢ, of the reflected laser beam LR and focus it onto a same focal plane. The design and the performance of the metalenses will be discussed further below, in the description of the figures 2A to 8.

The photodetector DT is a pixelated detector disposed in the focal plane of the metalenses to detect the sub-beams SBᵢ, i = 1 ... *N.* It comprises at least *N* pixels noted *P*₁ to *P_{N}.* The photodetector is typically a CCD, CMOS camera, a SPAD (Single Photon Avalanche Diode) array, a APD (avalanche photo-detector), a MPPC (muti-pixel photon counters) or an array of photomultiplier tubes.

According to the invention, each metalens comprises nanostructures NS with a structure adapted such that a sub-beam propagating with a given direction of propagation can only be focused onto one predetermined pixel of the photodetector DT. By "a structure adapted", it is meant that the refraction index, the dimensions and the spatial arrangement of the nanostructures of each metalens are optimized with respect to the wavelength *λ* to achieve the aforementioned result. Preferably, the nanostructures are optimized using a FDTD *(Finite Difference Time Domain)* simulation software, for example Lumerical or any other software dedicated to nanophotonics. The metalenses are optimized for a given geometry of the detector DT to match the numerical aperture, pixel size and the spatial distribution of the underlying detector array to achieve the aforementioned result.

In other words, each metalens MLᵢ, i = 1 ... *N* is adapted to focus the respective sub-beam SBᵢ onto a respective pixel *Pᵢ* only when said respective sub beam is incident onto said metalens within a predetermined range (Δ*θᵢ,* Δ*φᵢ*) of incident angles different from and not overlapping with the predetermined ranges (Δ*θⱼ,* Δ*φⱼ*) , *j* ≠ *i,j = 1... N* of optimal incident angle associated to other metalenses. This predetermined range (Δ*θᵢ,* Δ*φᵢ*) of incident angles is centered on a pair of optimal incident angle (*θ_{opt,i}*; *φ_{opt,i}*) which corresponds to the predetermined direction which the metalens MLᵢ is specifically adapted to focus onto its respective pixel *Pᵢ*.

According to one embodiment, each pair of optimal incident angle (*θ_{opt,i}*; *φ_{opt,i}*) *i = 1... N* is associated to a respective region *Rᵢ* of the photodetector, said respective region *Rᵢ* comprising a plurality of pixels different for the other regions and comprising the respective pixel *Pᵢ*.

The processing unit PU is connected to the photodetector and is configured to acquire an image with the photodetector for each controllable shift induced by the scanning element. By merging the images taken for each controllable shift induced, the processing unit PU can then reconstruct a large field of view image of the observed scene. This merging may be done by a simple concatenation of each image acquired for each controllable shift induced by the scanning element.

Preferably, the processing unit is also configured to determine a time of flight of each sub-beam detected by the photodetector from its emission by the laser source to its detection by the photodetector. From this time of flight measurement, the processor is then configured to determine the distance of the object(s) in the observed environment that reflected the incident beam LI.

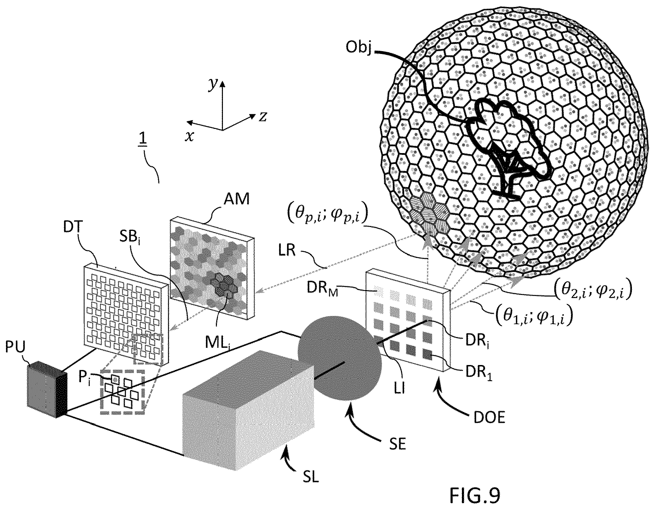

As will be explained below, through the use of an array of metalenses, the LIDAR imaging device 1 of the invention has an important FOV and can have a greater working distance than flash LIDAR devices of the prior art when used with a diffractive optical element to generate point cloud illuminations (see figure 9 described below). Further, it makes the LIDAR device 1 more compact than prior art LIDAR devices using metalenses to focus the reflected illumination onto the photodetector.

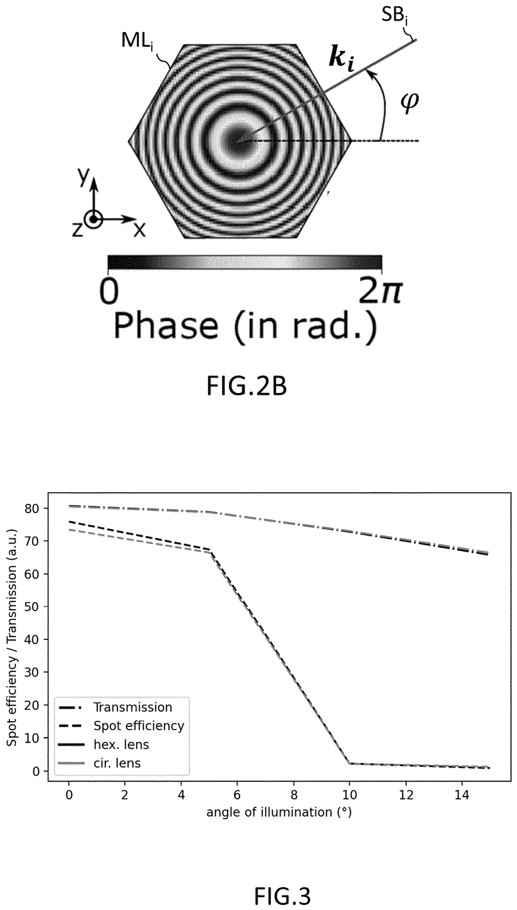

Figure 2A and 2B are schematic representations of a side view and a front view respectively of a metalens MLᵢ of the array AM according an embodiment of the invention. In figures 2A and 2B are represented a sub beam *SBᵢ* with a wavevector ***kᵢ*** that is incident onto the metalens with the optimal incident angles (*θ* ; *φ* ) associated with the metalens MLᵢ.

Further, in figure 2B, the phase profile of the metalens in the plane z = 0 (the plane of the array AM) is represented. This specific phase profile is given as an example for the metalens adapted to collect the normal incidence (i.e. focusing the reflected illumination incident with the pair of optimal incident angle (0 ° ; 0 ° )). According to an embodiment, each metalens MLᵢ of the array AM is such that its phase profile in the plane z = 0 is defined by but not limited to: $Φ \left(x, y\right) = - \frac{2 π . {n}_{t}}{λ} \left(\sqrt{{r}^{2} + {f}^{2}}-f\right) - \frac{2 π . {n}_{i}}{λ} {k}_{i} . r$ where *nₜ* and *nᵢ* are respectively the refractive indexes of a transmitted and an incident medium with respect to said metalens, f is a focal length of the metalens, and r = (x, y, 0) is a position vector in the plane z=0 and ***kᵢ*** is the normalized incident wave vector of the sub beam incident onto the metalens *MLᵢ* with the pair of optimal incident angle (*θ_{opt,i}*; *φ_{opt,i}*) associated with the metalens *MLᵢ.* Any other focusing like phase profile including quadratic or Bessel phase profile to which directionality phase information can be added and that renders the focusing directional can be considered.

The phase profile of the metalens must ensure that each metalens can collect light in its own direction in space (defined by the pair of optimal incident angle *(θ_{opt,i}*; *φ_{opt,i}*)). With a phase profile of this type, when the light signal comes from a direction in space that is not included in the numerical aperture of the metalens-pixel system (centered around the (*θ_{opt,i}*; *φ_{opt,i}*) direction), the light is focused outside its respective pixel of the photodetector and it does not activate. This observation is critical to the invention, as it is not obvious that properly designing the focal spot of each deflected signal to fit the aperture of the detector helps reducing the electromagnetic cross talk between detectors when light is coming from different directions.

Given as an example, the metalens MLᵢ has a hexagonal shape. Although other metalens design are possible, the use of hexagonal shaped metalenses slightly improves the spot efficiency at small angle of incidence compared to circular metalenses. In addition, the hexagonal metalenses provide effective coverage of the field of view. This result is illustrated in figure 3, which compares the transmission and the spot efficiency of a circular metalens and a hexagonal metalens of the same area (both designed for (*θ_{opt,i} =* 0 *° ; φ_{opt,i} =* 0 *°* )) as a function of the illumination angle *θ*. For clarification, the transmission is defined as the ratio of the two-dimensional integral of the Poynting vector just after the metasurface and the two-dimensional integral of the Poynting vector of the sub-beam. The two-dimensional integrals are performed on a surface corresponding to the area of the metalens. Likewise, the spot efficiency is the ratio between the 2D integral of the Poynting vector just after the metasurface (integrated on the hexagonal metasurface area) and the 2D integral of the Poynting vector in the focal plane (integrated on the pixel area).

From figure 3, one can see that the hexagonal shape does not deteriorate the functionality of the metalens. Indeed, the two shapes of metalens have the same transmission (dash-dot lines) greater than 70% for *θ* < 15°. On the other hand, for an illumination at normal incidence, the spot efficiency (dashed lines) is slightly higher for the hexagonal metalens by a few percent.

One should note that, through simulations, the inventors confirmed that the spot efficiency is rotation-invariant even if the metalens is hexagonal.

The metalenses of the invention act either as on or off-axis Fresnel lenses to focus the sub beams onto their respective pixels. For reasons of symmetry, the central metalens designed for zero incident angle has transmission and the phase profile presenting a radial symmetry. For off-axis lenses, the phase profiles are composed of a focusing and a directional contributions. To achieve this result, the metalenses comprises nanostructures NS arranged in a periodic grating on a substrate SB. The spatial period of the grating must be at least two times less than the wavelength *λ* of the incident laser beam LI.

Given as an example, the substrate is made of sapphire or silica and the nanostructures are made of GaN or silicon. However, the choice of the material is preferably adapted to the target wavelength of the laser source.

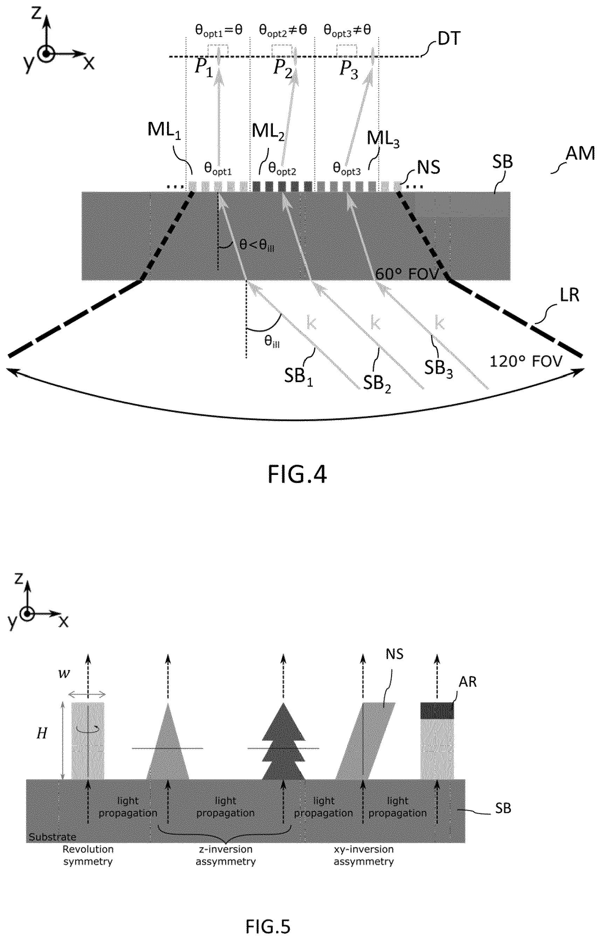

The figure 4 is a schematic illustration of a side view of the array AM of metalenses and the photodetector DT. Given as an example, three metalenses ML₁, ML₂ and ML₃, their respective sub-beams SB₁, SB₂ and SB₃, and their associated pixels P₁, P₂ and P₃ are represented in figure 4. In figure 4, the reflected beam LR is incident onto the array AM with an angle *θᵢₗₗ*, that is refracted into an angle *θ = θ*_{*opt,*1} because of the air-substrate interface. The refraction of the light on this first interface reduces the field of view compared to the field of view in air. Therefore, because of the substrate SB, the metalenses are optimized based on the refracted angles and not on the illumination angles *θᵢₗₗ* and *φᵢₗₗ.*

Thus, the reflected beam LR passes through a first air-substrate interface before illuminating the metalenses. Each metalenses then focuses its respective sub-beam. Given that the reflected beam LR is incident onto each metalens with an angle *θ = θ*_{*opt,*1}*,* the metalens ML₁ is the only metalens that focuses its respective sub beam SB₁ onto its associated pixel P₁. As can be seen in figure 4, the other metalenses ML₂, ML₃ focus their respective sub-beams SB₁, SB₂ outside of the detection zone of their associated pixels P₂ and P₃.

The field of view (FOV) of the device 1 is intrinsically limited by the transverse dimensions of the array AM (i.e. the dimensions in the xy plane comprising the AM array). Indeed, one can always adapt the photodetector DT to the transverse dimensions of the array AM. The transverse dimensions of the array AM are dependent upon the number N of metalenses, the spatial arrangement of the metalenses within the array AM, the dimensions and the orientation of each metalens. By "dimensions of each metalens", it is meant the transverse dimensions of the metalens, in the plane of the array AM. Given as an example, the number N of metalenses, the spatial arrangement of the metalenses within the array AM and the dimensions of each metalens are adapted such that a total field of view of said LIDAR device in air is greater than 90°×90°, preferably greater or equal to 120°×120°. For reference, because of refraction, a field of view of 120°×120° is reduced to a field of view in of 60°×60° in the substrate SB when the array AM comprises a sapphire substrate SB.

To have the most homogeneous discretization of the FOV with as few shadow zones (zones not observed by any lens) as possible, one can approximate the FOV by a portion of polyhedron made of hexagons and pentagons. Therefore, according to a preferred embodiment of the invention, each metalens has a hexagonal shape and the metalenses are arranged side by side such that the array of metalenses has an hexagonal shape. According to another embodiment, the array comprises metalenses with a hexagonal shape and metalenses with a pentagonal shape to sample the discretized FOV in a more optimal manner.

According to a specific embodiment, the FOV is approximated by a portion of polyhedron made of 310 hexagons and 6 pentagons and is sampled by an array AM of 316 hexagonal metalenses arranged edge to edge on an hexagonal array. Given as a non-limiting example, for compactness, each metalens has a maximal transverse dimension of 23 *µm*.

In another embodiment, the LIDAR device comprises a non-periodic detector DT and the array AM comprises metalenses with a non-unique geometry. Given as an example, the photodetector DT comprises a matrix of pixels with increasing distance between pixels and the array AM comprises metalenses with a top metasurface layer of increasing diameter. This configuration can help increase the dimension of the collection area and can improve the detection of sub-beams with high incidence angles. Thus, one can improve the signal to noise ratio of the pixels associated with those sub-beams.

In a more general approach, to properly sample the FOV, it is preferable that the array AM comprises more than *N* = 250 metalenses with a diameter comprised between 10 *µm* and 50 *µm.* By "diameter", it is meant the maximal transverse dimension of the metalens. With increasing nanofabrication capabilities, one can also consider arrays of large area metalenses (up to the cm or more), and associate to each metalens a single detector or even a ToF camera.

Through numerous simulations, the inventors observed that an optimal structure of the metalenses is one that comprises nanostructures presenting an aspect ratio H/w greater or equal to 2, preferably greater or equal to 10, with H a height and w a width of the nanostructures. In order to have the metalenses behaving as waveguide metasurfaces, according to one embodiment the height H of the nanostructures NS is greater than the wavelength *λ* of the incident laser beam LI. The nanostructures are designed with appropriate dimensions such that the array of metalenses can achieve a full phase modulation of 2*π* of the collected light.

By "height" of the nanostructures, it is meant the maximal dimension of the nanostructures along the direction perpendicular to the array AM (i.e. the direction z according to the illustrated examples). By "width" of the nanostructures, it is meant the maximal dimension of the nanostructures along a direction parallel to the array AM (i.e., the direction x or y according to the illustrated examples).

Figure 5 illustrates five different configurations of nanostructures NS that may be used in the metalenses of the invention. Those shapes are given as a non-limiting example and one skilled in the art can easily depart from those shapes to implement the invention.

As illustrated in the configuration of the far right of figure 5, the nanostructures NS may comprise an antireflection layer AR deposited on top of the nanostructure to enhanced the transmission of the metalens. Such a layer is optically transparent to the illumination wavelength *λ* and presents a thickness (dimension along the direction z) equal to *λ*/4.

Preferably, as illustrated in the configuration of the far left of figure 5, each nanostructure presents a circular symmetry (also called axial symmetry or revolution symmetry). Thus, the metalens have a polarization independent behavior.

According to a particular embodiment of the invention, the metalenses comprise nanostructures presenting a height *H* comprised between 500*nm* and 5 *µm* and a width comprised between *15 nm* and 250 *nm.*

In an alternative embodiment, each nanostructure is a metallic nanoparticle with a diameter comprised between *λ*/15 and *λ*/5. Although, these nanoparticles are less efficient to focus the sub-beams than the nanostructures illustrated in figure 5, they are quite efficient for wavelength in the THz range and the micro-wave range.

In another embodiment, each metalens ML is a Pancharatnam-Berry (PB) metasurface. A PB metasurface is known in the art (see e.g. Gao, Zhanjie, Golla, Sandeep, Sawant, Rajath, Osipov, Vladimir, Briere, Gauthier, Vezian, Stephane, Damilano, Benjamin, Genevet, Patrice and Dorfman, Konstantin E.. "Revealing topological phase in Pancharatnam-Berry metasurfaces using mesoscopic electrodynamics" Nanophotonics, vol. 9, no. 16, 2020, pp. 4711-4718. https://doi.org/10.1515/nanoph-2020-0365) and the phase shift induced by a PB metasurface is dependent on the orientation of the structures constituting the metasurface. Thus, the array AM can achieve a full phase modulation of 2*π* of the collected light by the appropriate orientation of each PB metalens with respect to the other metalenses.

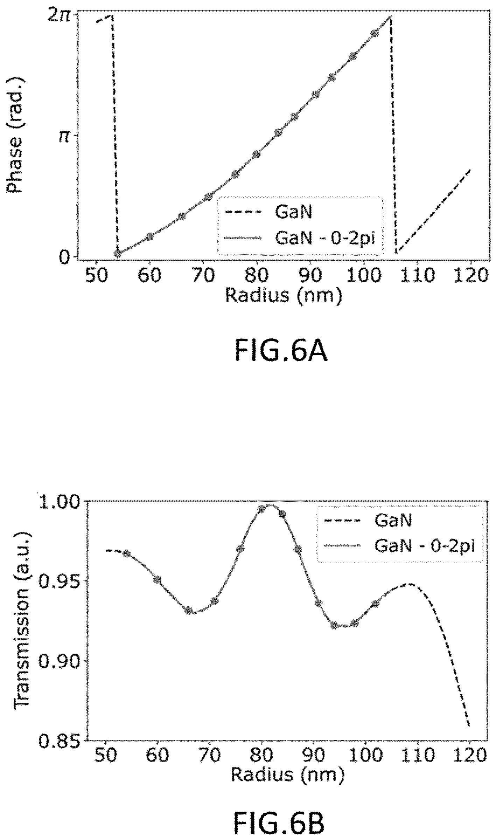

Figures 6A and 6B are representations of FDTD simulations of respectively the phase-shift and the transmission comprising periodic GaN cylinder on a square grating of periodicity 250 nm as a function of the radius of the cylinders, for a cylinder of height H = 1 *µm* .The non-dotted line in figures 6A and 6B correspond to a range of radius for which a 2*π* phase modulation is reached, and the points on the curves correspond to the radii that map the 2*π* phase modulation in *π*/12 steps. Note that the metasurfaces are composed of several GaN cylinders disposed according to the agreement between their respective phase (and amplitude) profile with the desired phase profile.

From figures 6A and 6B, one can see that the phase response of a single nanopillar of the illustrative embodiment can produce a full-phase modulation (2*π* phase shift) with a high transmission coefficient (higher than 90%) of the focused sub-beam.

Thus, in a more specific embodiment reference hereinafter as "illustrative embodiment", the nanostructures of each metalens are regularly spaced GaN cylinders with a period of 250 nm optimized for *λ* = 633 *nm.* Each nanostructures has a height H = 1 *µm* and a width w ranging between 108 nm and 204 nm.

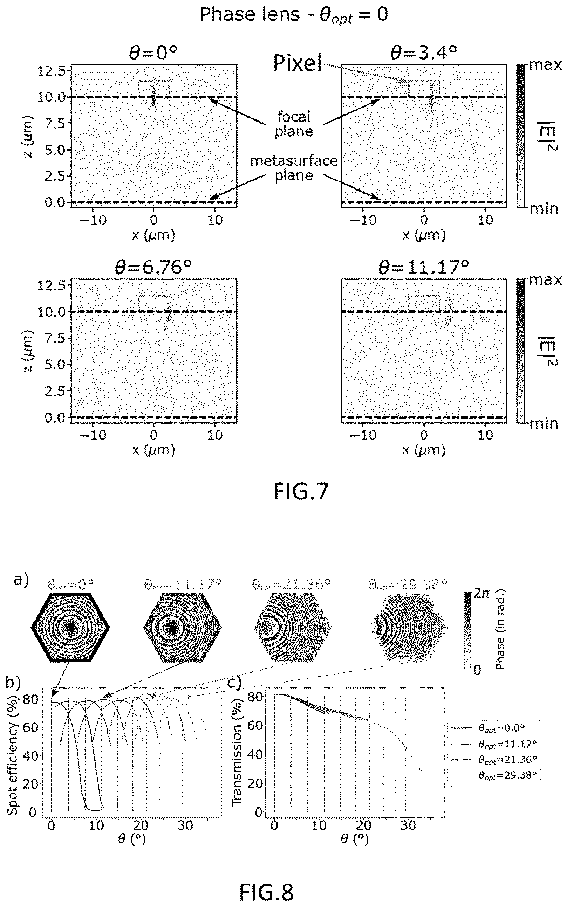

Figure 7 shows a transverse view of the light intensity the focal plane in (according to the xOz plane) for four different direction propagations : *θ* = 0 *°* , *θ* = 3.40 *°* , *θ* = 6.76 *°* and *θ* = 11.17 *°* . These intensity maps are shown for a metalens of the illustrative embodiment, optimized for a direction propagation (*θ_{opt,i} =* 0 *° ; φ_{opt,i} =* 0 *°* ) and referenced hereinafter as metalens ML₀.

Given as an example, in the illustrative embodiment, each pixel has a dimension of 5 *µm* along the x axis and each metalens is adapted map the field of view in angular steps of 6.66° in *θ* and in 7.5° in *φ.* In other words, in this example, the structure of each i-th metalens *MLᵢ* for i = 1 ... *N* is adapted to focus light onto its associated pixel for a range of incident angles with a width Δ*θᵢ* = 6.66° , and Δ*φᵢ = 7.5 ° .*

More generally, in the invention, it is preferable that each i-th metalens *MLᵢ* for i = 1... is adapted such that its associated predetermined range of incident angles has a width Δ*θᵢ* and Δ*φᵢ* comprised between 1° and 10°. This allows for a satisfying mapping of the observed field of view. These widths depend on the number of pixels of the detector DT and the desired FOV.

The top black dotted line of figure 7 symbolizes the focal plane at *f =* 10 *µm* and the bottom dotted line represents the plane of the array AM. The gray dotted line area corresponds to the size of the pixel associated with the metalens. The extreme values of the grayscale are the maximum and minimum intensities of the field map at normal incidence.

Comparing the four field maps of figure 7, one can see that the focal spot of the sub-beam focused by the metalens ML₀ distorts, attenuates, and moves away from the center of the pixel as the angle moves away from the optimal detection angle *θ_{opt,i} =* 0 *°* . The focal spot even comes out of the gray area symbolizing the pixel when the angle of incidence *θ* is greater than 6.76°. In this last case, the sub-beam is not detected by the pixel associated to the metalens ML₀.

Figure 8 is an illustration of the spot efficiency and the transmission of a set of ten metalenses of the array AM of the illustrative embodiment, respectively optimized for an optimal detection angles *θ_{opt,i} =* 0 *° ,* 3.77 ° , 7.50 ° , 11.17 *°* , 14.73 *°* ,18.14 ° , 21.36 *°* , 24.34 *°* , 27.03 *°* and 29.38 *°* and *φ_{opt,i}* = 0° .

More precisely, the top portion a) of figure 8 illustrates the evolution of the phase profile as the oblique optimal detection angle *θₒₚₜ* increases. Further, the bottom left portion b) is a graph representing the evolution of the spot efficiency, as a function of the angle of incidence *θ*, of a set of ten different metalenses optimized for different optimal incident angle comprising the aforementioned four metalenses. Finally, the bottom right graph c) represents the evolution of the transmission as a function of the angle of incidence *θ* of the same set of ten different metalenses. In graphs b) and c) the leftmost curve is associated to the metalens optimized for the normal incidence and the rightmost curve is associated to the metalens optimized for the most oblique optimal incident angle (*θₒₚₜ* = 29.38 *°* ). The vertical lines in graphs b) and c) correspond to the optimal incident angle of each of the ten lenses.

In portion a) of figure 8, one can see that to focus the light coming from an increasingly oblique direction, it is necessary to shift and deform more and more the center of the phase profile.

On the graph b) of figure 8, we observe that the spot efficiency of each metalens is maximal (about 80%) for the optimal incident angle *θₒₚₜ* independently of the value of this incident optimal angle. Then, for all metalenses, the spot efficiency decreases with the deviation from the optimal angle. The evolution of the curves is Gaussian, with a width that depends very little on the optimal incident angle. Further, through simulations the inventors observed that the decentering of the focal point as a function of the incident angle is similar for all metalenses, independently of the optimal incident angle.

On the graph b) of figure 8, one can also determine whether the phase profiles of the lenses are sufficiently angularly dissociated, i.e., whether, for a given angle of incidence *θ*, the spot efficiency is large for one metalens and small for all others. Otherwise the uncertainty on the direction of illumination will be high. On graph b) we can see that, for any given metalens, the lens immediately adjacent has a focusing efficiency that remains high (around 70% against 80% for the optimal angle) therefore the risk of cross-talk is very high. Thus, the photodetector may need to be optimized so that one direction of the reflected beam LR can only be focused onto one pixel of the photodetector DT. Indeed, to prevent any cross-talk between pixels, it is preferable to reduce the detection area (i.e. the pixels area) so that the focal point of the sub-beam intercepts the detection area over a smaller range of incident angles. For example, according to one embodiment in which the photodetector DT is a camera, the processing unit may be configured to integrate the field intensity on a smaller number of pixels to artificially reduce the detection area and avoid crosstalk between pixels. According to another embodiment in which the photodetector DT is a matrix of physical detectors (e.g. SPADs), the photodetector DT may comprise a mask (e.g. a gold mask). For example, this mask comprises circular holes smaller than the dimensions of the physical detectors and disposed optically upstream of the physical detectors to mechanically reduce the detection area and thus reduce the crosstalk between pixels.

On graph c) of figure 8, we observe that the transmission of each metalens is nearly identical whatever the incident angle *θ* and remains above 50% even for an incident angle of *θ* = 30 *°* .

Figure 9 is a schematic illustration of a LIDAR device 1 according to a second embodiment of the invention. The LIDAR device 1 according to the second embodiment of the invention figure differs from the first embodiment of the invention illustrated in figure 1 in that it comprises a diffractive optical element DOE thus making the device 1 a flash LIDAR device.

More precisely, the diffractive optical element comprises M > 1 diffraction regions DR₁- DR_{M}. Each diffraction region is adapted to generate a respective point cloud with diffraction directions that preferably do not overlap with diffraction directions of the point cloud of the other diffraction regions. In other words, each i-th diffraction region DRᵢ, *i* = 1 ... *M* is adapted to diffract the incident laser beam LI in at least a plurality of p > 1 different directions [(*θ*_{1,*i*}; *φ*_{1*,i*}), ... (*θ_{p,i}* ; *φ_{p,i}*)] toward the three dimensional environment Obj. Preferably, each direction (*θ_{k,i}*; *φ_{k,i}*), *k* = 1 ... *p* is different from the other directions (*θ_{k,j}*; *φ_{k,j}*), *k =* 1 ... *p, j* ≠ *i,j =* 1 ... *N* associated with the other diffraction regions. This lead to a faster mapping of the observed FOV.

Further, in the LIDAR device of figure 9, the scanning element SE is adapted to scan the different diffraction regions of the diffraction optical element DOE. Given as an example, the scanning element is adapted to such that the incident laser beam LI illuminates successively each diffraction region.

Thus, the diffraction optical element DOE generates a points cloud to compute the source-object distance simultaneously in several directions and the processing unit can reconstruct a complete image of the observed environment faster than the first embodiment of the invention. Indeed, the generation of point clouds reduces the number of scanning steps necessary to fully reconstruct the FOV.

According to an embodiment, the diffraction regions are metasurfaces designed using an inverse reconstruction algorithm. Given as an example, the phase profile of each diffraction region is designed to produce a predetermined point cloud using the Gerchberg-Saxton (GS) algorithm or a modified Gerchberg-Saxton algorithm. This algorithm determines a phase profile that generates a far field diffraction pattern. To do this, it performs a cycles of Fourier transform and inverse Fourier transform to switch iteratively between the plane of the diffractive optical element DOE and the far field plane and, for each iteration, changes the intensity or phase of the complex wave. In our case, the far-field image is a point cloud whose distribution counterbalances the Barrel distortion that occurs during the wave propagation. This distortion is all the stronger as the angles with which the light propagates are important. To annihilate this effect, the inventors determined the pair of angles that give the position of each of the points on the diffraction sphere, then projected them in the plane to obtain the far field image to be used in the GS algorithm.

Another advantage of this design method is that it can produce diffraction regions which generate a points cloud with identical intensity for each direction. This is a stark contrast compared to conventional diffraction methods (i.e. gratings) where the intensity decreases as the diffraction order increases. For this, one adjusts the intensity of the light spots on the far field images used in the GS algorithm.

More generally, in the invention it is preferable that each diffraction region is designed using an inverse problem reconstruction algorithm such that it generates said respective point with identical intensity for each direction using a far field image of the diffraction pattern produced by said diffraction region.

In order to have the most uniform distribution of points, the inventors estimated that it is preferable that the diffraction optical element DOE comprises at least 10 diffraction regions, each diffraction region generating at least 200 diffraction directions.

On the other hand, to ensure that each point generated presents a sufficient intensity and to avoid as much as possible an overlap between the diffraction points generated by two different diffraction regions, it is preferable the diffraction optical element DOE comprises less than 50 diffraction regions, each diffraction region generating less than 500 diffraction directions More precisely, it is preferable that the number of diffraction directions must be less than or equal to the number of metalenses. Limiting the number of diffraction directions helps increasing the working distance of the LIDAR device.

As a non-limiting example, the diffraction optical element DOE comprises 19 diffraction regions is sufficient, each diffraction region generating 316 diffraction directions. In this example, the LIDAR device can generate up to 316×19 = 6004 points to image the observed environment.

Preferably, in the device 1 of figure 9, the laser source SL is a pulsed laser source and the scanning element is synchronized with the laser source such that each laser pulse illuminates a diffraction region that is different from a diffraction region illuminated by the previous pulse.

## Claims

1. A LIDAR device (1) to image a three dimensional environment (Obj) comprising :
- a laser source (SL) adapted to emit an incident laser beam (LI) presenting a wavelength *λ* and illuminating said three dimensional environment thus forming a reflected laser beam (LR);
- a scanning element (SE) adapted to induce a plurality of controllable shifts of a direction of propagation of said incident laser beam (LI) onto said three dimensional environment;
said device being **characterized in that** it comprises:
- an array (AM) of *N* > 1 metalenses (ML₁₋ML_{N}), each adapted to collect a respective portion, called a sub-beam, of the reflected laser beam (LR) and to focus it onto a same focal plane ;
- a photodetector (DT) disposed in said focal plane to detect said sub-beams and comprising at least *N* pixels noted *P*₁ to *P_{N},* wherein each i-th metalens (MLᵢ), i = *1... N* is adapted to focus the respective sub-beam (SBᵢ) onto a respective pixel *Pᵢ* only when said respective sub-beam is incident onto said metalens within a predetermined range of incident angles centered on a respective pair of optimal incident angles different from and not overlapping with the predetermined ranges of optimal incident angles associated to other metalenses, each metalens is such that its phase profile ensures collecting light in its own direction in space defined by the pair of optimal incident angles;
- a processing unit (PU) connected to the photodetector and the scanning element and configured to acquire an image with the photodetector for each controllable shift induced by the scanning element.

2. A LIDAR device according to claim 1, wherein the processing unit is configured to determine a time-of-flight of the sub-beam detected by the photodetector.

3. A LIDAR device according to claims 1 or 2, wherein the photodetectors and the metalenses are adapted such that the reflected laser beam (LR) incident onto the array of metalenses within one of said predetermined ranges of incident angles is focused only onto the respective pixel *Pᵢ* associated with said predetermined range of incident angles.

4. A LIDAR device according to any of the preceding claims, wherein each metalens comprises nanostructures (NS) arranged in a periodic grating on a substrate (SB).

5. A LIDAR device according to claim 4, wherein each nanostructure presents an aspect ratio *H*/*w* greater than or equal to 2, preferably greater than or equal to 10, with H a height and w a width of said nanostructures, said height H being greater than said wavelength *λ*; wherein the nanostructures present a height H comprised between 500 *nm* and 5 *µm* and a width comprised between 15 *nm* and 250 *nm.*

6. A LIDAR device according to claims 4 or 5, wherein each nanostructure presents a circular symmetry preferably a cylindric shape or a conic shape.

7. A LIDAR device according to claim 6, wherein each nanostructure is a metallic nanoparticle with a diameter comprised between *λ*/15 and *λ*/5.

8. A LIDAR device according to any of the preceding claims, wherein each metalens is such that its phase profile is defined by : $Φ \left(x, y\right) = - \frac{2 π . {n}_{t}}{λ} \left(\sqrt{{r}^{2} + {f}^{2}}-f\right) - \frac{2 π . {n}_{i}}{λ} {k}_{i} . r$ where *nₜ* and *nᵢ* are respectively the refractive indexes of a transmitted and an incident medium with respect to said metalens, f is a focal length of the metalens, and r = (x, y, 0) is a position vector in the plane z=0 and ***kᵢ*** is a normalized incident wave vector of the respective sub beam incident onto said metalens with said pair of optimal incident angles.

9. A LIDAR device according to any of the preceding claims, wherein the number N of metalenses, a spatial arrangement of the metalenses within said array and a diameter of each metalens are adapted such that a total field of view of said LIDAR device is equal to 120 *°* × 120 *°* .

10. A LIDAR device according to any of the preceding claims, wherein each metalens has a hexagonal shape, and wherein the metalenses are arranged side by side such that the array of metalenses has a hexagonal shape.

11. A LIDAR device according to claims 7 and 8, wherein said array comprises more than *N* = 250 with a diameter comprised between 10 *µm* and 1 *cm.*

12. A LIDAR device according to the preceding claim, wherein each metalens is adapted such that its associated predetermined range of incident angles has a width comprised between 1° and 10°.

13. A LIDAR device according to any of the preceding claims, wherein the laser source is a pulsed laser source such that said incident laser beam presents a plurality of laser pulses, and wherein the scanning element is synchronized with the laser source to induce a controllable shift of a direction of propagation of said incident laser beam (LI) for each laser pulse.

14. A LIDAR device according to any of the preceding claims, comprising a diffractive optical element (DOE) comprising M > 1 diffraction regions (DR₁- DR_{M}), each i-th diffraction region (DRᵢ), i = 1 ... *M* being adapted to diffract the incident laser beam toward the three dimensional environment generating a respective point cloud in at least a plurality of p > 1 different directions, and wherein the scanning element is adapted such that the incident laser beam (LI) illuminates a different diffraction region after each controllable shift of a direction of propagation.

15. A LIDAR device according to claim 12, wherein each diffraction region is designed by conventional diffraction consideration and/or using an inverse problem reconstruction algorithm, for example the Gerchberg-Saxton algorithm, such that it generates said respective point with identical intensity for each direction.

16. A LIDAR device according to any of the preceding claims, wherein the processing unit is adapted to compute an image that is the concatenation of each image acquired for each controllable shift induced by the scanning element.

## Patentansprüche

1. LIDAR-Vorrichtung (1) zum Abbilden einer dreidimensionalen Umgebung (Obj), umfassend:
- eine Laserquelle (SL), die geeignet ist, um einen einfallenden Laserstrahl (LI) zu emittieren, der eine Wellenlänge *λ* aufweist, und der die dreidimensionale Umgebung beleuchtet, wodurch ein reflektierter Laserstrahl (LR) ausgebildet wird;
- ein Abtastelement (SE), das geeignet ist, um eine Vielzahl von steuerbaren Verschiebungen einer Ausbreitungsrichtung des einfallenden Laserstrahls (LI) auf die dreidimensionale Umgebung zu induzieren;
wobei die Vorrichtung **dadurch gekennzeichnet ist, dass** sie umfasst:
- ein Array (AM) von *N* > 1 Metalinsen (ML₁-ML_{N}), die jeweils geeignet sind, um einen jeweiligen Anteil, der als Teilstrahl bezeichnet wird, des reflektierten Laserstrahls (LR) zu sammeln und ihn auf dieselbe Fokalebene zu fokussieren;
- einen Photodetektor (DT), der in der Fokalebene eingerichtet ist, um die Teilstrahlen zu detektieren, und umfassend mindestens *N* Pixel, bezeichnet mit *P₁* bis *P_{N},* wobei jede *i*-te Metalinse (MLᵢ), i = 1 ... *N* geeignet ist, um den jeweiligen Teilstrahl (SBᵢ) auf ein jeweiliges Pixel *Pᵢ* nur dann zu fokussieren, wenn der jeweilige Teilstrahl auf die Metalinse innerhalb eines vorbestimmten Bereichs von Einfallswinkeln einfällt, der um ein jeweiliges Paar von optimalen Einfallswinkeln zentriert ist, die unterschiedlich von und nicht überlappend mit den vorbestimmten Bereichen optimaler Einfallswinkel sind, die anderen Metalinsen zugeordnet sind,
wobei jede Metalinse derart ist, dass ihr Phasenprofil das Sammeln von Licht in ihrer eigenen Raumrichtung sicherstellt, die durch das Paar von optimalen Einfallswinkeln definiert ist;
- eine Verarbeitungseinheit (PU), die mit dem Photodetektor und dem Abtastelement verbunden und konfiguriert ist, um ein Bild mit dem Photodetektor für jede durch das Abtastelement induzierte steuerbare Verschiebung zu erfassen.

2. LIDAR-Vorrichtung nach Anspruch 1, wobei die Verarbeitungseinheit konfiguriert ist, um eine Laufzeit des durch den Photodetektor detektierten Teilstrahls zu bestimmen.

3. LIDAR-Vorrichtung nach den Ansprüchen 1 oder 2, wobei die Photodetektoren und die Metalinsen derart geeignet sind, dass der reflektierte Laserstrahl (LR), der auf das Array von Metalinsen innerhalb eines der vorbestimmten Einfallswinkelbereiche einfällt, nur auf das jeweilige Pixel *Pᵢ* fokussiert wird, das dem vorbestimmten Bereich von Einfallswinkeln zugeordnet ist.

4. LIDAR-Vorrichtung nach einem der vorstehenden Ansprüche, wobei jede Metalinse Nanostrukturen (NS) umfasst, die in einem periodischen Gitter auf einem Substrat (SB) angeordnet sind.

5. LIDAR-Vorrichtung nach Anspruch 4, wobei jede Nanostruktur ein Aspektverhältnis *H*/*w* von größer als oder gleich 2, vorzugsweise größer als oder gleich 10, aufweist, wobei *H* eine Höhe und *w* eine Breite der Nanostrukturen ist, wobei die Höhe *H* größer als die Wellenlänge *λ* ist; wobei die Nanostrukturen eine Höhe *H* zwischen 500 *nm* und 5 *µm* und eine Breite zwischen 15 *nm* und 250 *nm.* aufweisen.

6. LIDAR-Vorrichtung nach Anspruch 4 oder 5, wobei jede Nanostruktur eine kreisförmige Symmetrie, vorzugsweise eine zylindrische Form oder eine konische Form, aufweist.

7. LIDAR-Vorrichtung nach Anspruch 6, wobei jede Nanostruktur ein metallisches Nanopartikel mit einem Durchmesser ist, der zwischen *λ*/15 und *λ*/5 umfasst ist.

8. LIDAR-Vorrichtung nach einem der vorstehenden Ansprüche, wobei jede Metalinse derart ist, dass ihr Phasenprofil definiert ist durch: $Φ \left(x, y\right) = - \frac{2 π . {n}_{t}}{λ} \left(\sqrt{{r}^{2} + {f}^{2}}-f\right) - \frac{2 π . {n}_{i}}{λ} {k}_{i} . r$ wobei *nₜ* bzw. *nᵢ* die Brechungsindizes eines übertragenen und eines einfallenden Mediums in Bezug auf die Metalinse sind, *f* eine Brennweite der Metalinse ist, und ***r*** = (x,y, 0) ein Positionsvektor in der Ebene z=0 ist und ***kᵢ*** ein normierter einfallender Wellenvektor des jeweiligen Teilstrahls ist, der auf die Metalinse mit dem Paar von optimalen Einfallswinkeln einfällt.

9. LIDAR-Vorrichtung nach einem der vorstehenden Ansprüche, wobei die Anzahl *N* von Metalinsen, eine räumliche Anordnung der Metalinsen innerhalb des Arrays und ein Durchmesser jeder Metalinse derart geeignet sind, dass ein Gesamtsichtfeld der LIDAR-Vorrichtung gleich 120° x 120° ist.

10. LIDAR-Vorrichtung nach einem der vorstehenden Ansprüche, wobei jede Metalinse eine hexagonale Form aufweist, und wobei die Metalinsen derart nebeneinander angeordnet sind, dass das Array von Metalinsen eine hexagonale Form aufweist.

11. LIDAR-Vorrichtung nach den Ansprüchen 7 und 8, wobei das Array mehr als *N* = 250 mit einem Durchmesser zwischen 10 *µm* und 1 *cm* umfasst.

12. LIDAR-Vorrichtung nach dem vorstehenden Anspruch, wobei jede Metalinse derart geeignet ist, dass ihr zugeordneter vorbestimmter Bereich von Einfallswinkeln eine Breite aufweist, die zwischen 1° und 10° umfasst ist.

13. LIDAR-Vorrichtung nach einem der vorstehenden Ansprüche, wobei die Laserquelle eine gepulste Laserquelle ist, derart, dass der einfallende Laserstrahl eine Vielzahl von Laserimpulsen aufweist, und wobei das Abtastelement mit der Laserquelle synchronisiert ist, um für jeden Laserimpuls eine steuerbare Verschiebung einer Ausbreitungsrichtung des einfallenden Laserstrahls (LI) zu induzieren.

14. LIDAR-Vorrichtung nach einem der vorstehenden Ansprüche, umfassend ein diffraktives optisches Element (DOE), umfassend *M* > 1 Beugungsregionen (DR₁-DR_{M}), wobei jede *i*-te Beugungsregion (DRᵢ), *i =* 1 ... *M* geeignet ist, um den einfallenden Laserstrahl zu der dreidimensionalen Umgebung hin zu beugen, wobei eine jeweilige Punktwolke in mindestens einer Vielzahl von *p* > 1 unterschiedlichen Richtungen generiert wird, und
wobei das Abtastelement derart geeignet ist, dass der einfallende Laserstrahl (LI) eine unterschiedliche Beugungsregion nach jeder steuerbaren Verschiebung einer Ausbreitungsrichtung beleuchtet.

15. LIDAR-Vorrichtung nach Anspruch 12, wobei jede Beugungsregion durch konventionelle Beugungsbetrachtung und/oder durch Verwenden eines Rekonstruktionsalgorithmus für inverse Probleme, zum Beispiel des Gerchberg-Saxton-Algorithmus, derart ausgelegt ist, dass sie den jeweiligen Punkt mit identischer Intensität für jede Richtung generiert.

16. LIDAR-Vorrichtung nach einem der vorstehenden Ansprüche, wobei die Verarbeitungseinheit geeignet ist, um ein Bild zu berechnen, das die Verkettung jedes Bildes ist, das für jede durch das Abtastelement induzierte steuerbare Verschiebung erfasst wird.

## Revendications

1. Dispositif LIDAR (1) permettant d'imager un environnement tridimensionnel (Obj) comprenant :
- une source laser (SL) conçue pour émettre un faisceau laser incident (LI) présentant une longueur d'onde *λ* et éclairant ledit environnement tridimensionnel formant ainsi un faisceau laser réfléchi (LR) ;
- un élément de balayage (SE) conçu pour induire une pluralité de décalages réglables d'une direction de propagation dudit faisceau laser incident (LI) sur ledit environnement tridimensionnel ;
ledit dispositif étant **caractérisé en ce qu'**il comprend :
- un réseau (AM) de *N* > 1 métalentilles (ML₁-ML_{N}), chacune conçue pour collecter une partie respective, appelée sous-faisceau, du faisceau laser réfléchi (LR) et pour la focaliser sur un même plan focal ;
- un photodétecteur (DT) disposé dans ledit plan focal pour détecter lesdits sous-faisceaux et comprenant au moins N pixels numérotés de *P₁* à *P_{N}*, dans lequel chaque *i*-ième métalentille (MLᵢ), *i* = 1... *N* est conçue pour focaliser le sous-faisceau correspondant (SBᵢ) sur un pixel correspondant *Pᵢ* uniquement lorsque ledit sous-faisceau respectif est incident sur ladite métalentille dans une plage prédéterminée d'angles d'incidence centrée sur une paire respective d'angles d'incidence optimaux différente, et ne chevauchant pas, des plages prédéterminées d'angles d'incidence optimaux associées à d'autres métalentilles,
chaque métalentille est telle que son profil de phase assure la collecte de la lumière dans sa propre direction dans l'espace défini par la paire d'angles d'incidence optimaux ;
- une unité de traitement (PU) connectée au photodétecteur et à l'élément de balayage et configurée pour acquérir une image avec le photodétecteur pour chaque décalage réglable induit par l'élément de balayage.

2. Dispositif LIDAR selon la revendication 1, dans lequel l'unité de traitement est configurée pour déterminer un temps de vol du sous-faisceau détecté par le photodétecteur.

3. Dispositif LIDAR selon les revendications 1 ou 2, dans lequel les photodétecteurs et les métalentilles sont conçus de manière que le faisceau laser réfléchi (LR) incident sur le réseau de métalentilles au sein de l'une desdites plages prédéterminées d'angles d'incidence soit focalisé uniquement sur le pixel respectif *Pᵢ* associé à ladite plage prédéterminée d'angles d'incidence.

4. Dispositif LIDAR selon l'une quelconque des revendications précédentes, dans lequel chaque métalentille comprend des nanostructures (NS) disposées en réseau périodique sur un substrat (SB).

5. Dispositif LIDAR selon la revendication 4, dans lequel chaque nanostructure présente un rapport d'aspect *H*/*w* supérieur ou égal à 2, de préférence supérieur ou égal à 10, avec *H* une hauteur et *w* une largeur desdites nanostructures, ladite hauteur *H* étant supérieure à ladite longueur d'onde *λ* ; dans lequel les nanostructures présentent une hauteur *H* comprise entre 500 *nm* et 5 *µm* et une largeur comprise entre 15 *nm* et 250 *nm.*

6. Dispositif LIDAR selon les revendications 4 ou 5, dans lequel chaque nanostructure présente une symétrie circulaire, de préférence une forme cylindrique ou une forme conique.

7. Dispositif LIDAR selon la revendication 6, dans lequel chaque nanostructure est une nanoparticule métallique avec un diamètre compris entre *λ*/15 et *λ*/5.

8. Dispositif LIDAR selon l'une quelconque des revendications précédentes, dans lequel chaque métalentille est telle que son profil de phase est défini par : $Φ \left(x, y\right) = - \frac{2 π . {n}_{t}}{λ} \left(\sqrt{{r}^{2} + {f}^{2}}-f\right) - \frac{2 π . {n}_{i}}{λ} {k}_{i} . r$ où *nₜ* et *nᵢ* sont respectivement les indices de réfraction d'un milieu transmis et incident par rapport à ladite métalentille, *f* est une distance focale de la métalentille, et ***r*** = (x, y, 0) est un vecteur de position dans le plan z = 0, et ***k**ᵢ* est un vecteur d'onde incident normalisé du sous-faisceau respectif incident sur ladite métalentille avec ladite paire d'angles d'incidence optimaux.

9. Dispositif LIDAR selon l'une quelconque des revendications précédentes, dans lequel le nombre *N* de métalentilles, une disposition spatiale des métalentilles au sein dudit réseau et un diamètre de chaque métalentille sont conçus de manière que le champ de vision total dudit dispositif LIDAR soit égal à 120° × 120°.

10. Dispositif LIDAR selon l'une quelconque des revendications précédentes, dans lequel chaque métalentille présente une forme hexagonale, et dans lequel les métalentilles sont disposées côte à côte de manière que le réseau de métalentilles présente une forme hexagonale.

11. Dispositif LIDAR selon les revendications 7 et 8, dans lequel ledit réseau comprend plus de *N* = 250 avec un diamètre compris entre 10 *µm* et 1 *cm.*

12. Dispositif LIDAR selon la revendication précédente, dans lequel chaque métalentille est conçue de manière que la plage prédéterminée associée d'angles d'incidence présente une largeur comprise entre 1° et 10°.

13. Dispositif LIDAR selon l'une quelconque des revendications précédentes, dans lequel la source laser est une source laser pulsée de manière que ledit faisceau laser incident présente une pluralité d'impulsions laser, et dans lequel l'élément de balayage est synchronisé avec la source laser pour induire un décalage réglable d'une direction de propagation dudit faisceau laser incident (LI) pour chaque impulsion laser.

14. Dispositif LIDAR selon l'une quelconque des revendications précédentes, comprenant un élément optique diffractif (DOE) comprenant *M* > 1 régions de diffraction (DR₁- DR_{M}), chaque *i*-ième région de diffraction (DRᵢ), *i =* 1... *M* étant conçue pour diffracter le faisceau laser incident vers l'environnement tridimensionnel, générant ainsi un nuage de points respectif dans au moins une pluralité de *p* > 1 directions différentes, et
dans lequel l'élément de balayage est conçu de manière que le faisceau laser incident (LI) éclaire une région de diffraction différente après chaque décalage réglable d'une direction de propagation.

15. Dispositif LIDAR selon la revendication 12, dans lequel chaque zone de diffraction est conçue selon les principes classiques de la diffraction et/ou à l'aide d'un algorithme de reconstruction par problème inverse, par exemple l'algorithme de Gerchberg-Saxton, de manière à générer ledit point respectif avec une intensité identique pour chaque direction.

16. Dispositif LIDAR selon l'une quelconque des revendications précédentes, dans lequel l'unité de traitement est conçue pour calculer une image qui est la concaténation de chaque image acquise pour chaque décalage réglable induit par l'élément de balayage.
